Europäisches Patentamt

(19) European Patent Office

Office européen des brevets

(11) Numéro de publication: **0 156 669**
**B1**

(12) **FASCICULE DE BREVET EUROPÉEN**

(51) Int. Cl.⁴: **A 47 J 27/092**

(45) Date de publication du fascicule du brevet:
**23.09.87**

(21) Numéro de dépôt: **85400268.0**

(22) Date de dépôt: **15.02.85**

(54) Dispositif de sécurité à la fermeture et à l'ouverture d'un appareil de cuisson sous pression.

(30) Priorité: **29.02.84 FR 8403153**

(43) Date de publication de la demande:
**02.10.85 Bulletin 85/40**

(45) Mention de la délivrance du brevet:
**23.09.87 Bulletin 87/39**

(84) Etats contractants désignés:
**AT BE CH DE FR GB IT LI LU NL SE**

(56) Documents cité:
**DE-A-2 511 845**
**DE-A-3 223 142**
**FR-A-2 055 207**
**FR-A-2 484 817**
**US-A-2 566 008**
**US-A-4 103 801**

(73) Titulaire: **SEB S.A., F-21260 Selongey (FR)**

(72) Inventeur: **Sebillotte, Christian, 6 rue des Moutons, F-21260 Selongey (FR)**

(74) Mandataire: **Bouju, André, Cabinet Bouju 38 avenue de la Grande Armée, F-75017 Paris (FR)**

EP 0 156 669 B1

## Description

La présente invention concerne un dispositif de sécurité à la fermeture et à l'ouverture d'un appareil de cuisson sous pression, tel qu'un autocuiseur.

Ce dispositif s'applique aux appareils de cuisson sous pression comprenant une cuve sur laquelle est monté un couvercle, le bord de celui-ci et le bord de la cuve comportant des rampes destinées à s'engager les unes sous les autres par rotation du couvercle sur la cuve. Un tel système de verrouillage est appelé communément verrouillage à baïonnette.

Le couvercle et la cuve comportent chacun une poignée. Pour verrouiller le couvercle on tourne celui-ci au moyen de sa poignée pour l'amener en superposition avec la poignée de la cuve.

En fin de cuisson, l'utilisateur doit impérativement faire chuter la pression à l'intérieur de l'appareil, avant d'ouvrir le couvercle, sous peine d'être gravement brûlé par la vapeur s'échappant brutalement de cet appareil.

A cet effet, les appareils connus sont généralement pourvus d'une soupape que l'utilisateur doit enlever ou mettre en position d'échappement de la vapeur.

L'utilisateur risque cependant d'oublier cette opération.

Il est par conséquent très souhaitable de créer un dispositif de sécurité qui interdise à l'utilisateur d'ouvrir le couvercle tant que l'appareil est encore sous pression.

Dans certains types d'appareils de cuisson, tels que celui décrit dans le brevet français 2 484 817 de la demanderesse, le couvercle comprend un orifice communiquant avec l'intérieur de la cuve, dans lequel est montée une tige munie d'une soupape destinée à fermer cet orifice lorsque la pression à l'intérieur de la cuve atteint une valeur prédéterminée.

Dans le brevet français précité, on a décrit un appareil de cuisson sous pression qui comprend une cuve sur laquelle est monté un couvercle, le bord de ce dernier et le bord de la cuve comportant des rampes, destinées à s'engager les unes sous les autres et verrouiller par rotation le couvercle sur la cuve. Ce couvercle et cette cuve comprennent chacun une poignée. Le couvercle comporte une ouverture communiquant avec l'intérieur de la cuve, dans laquelle est montée une tige munie d'une soupape destinée à fermer cette ouverture lorsque la pression à l'intérieur de la cuve atteint une valeur prédéterminée.

Cet appareil de cuisson est muni en outre d'un dispositif de sécurité comprenant des moyens qui coopèrent ensemble avec la tige de la soupape du couvercle pour interdire la fermeture de la soupape tant que les deux poignées ne sont pas en position de fermeture et pour interdire l'ouverture du couvercle lorsque les deux poignées sont en position de verrouillage, tant que la soupape est en positon de fermeture.

Ces moyens comprennent un ergot mobile dans une poignée, coopérant avec l'extrémité de l'une des rampes de verrouillage de bord du récipient pour empêcher l'ouverture du couvercle. Cet ergot est solidaire d'une patte comportant une ouverture située en regard de la soupape lorsque l'ergot est en position de verrouillage, de sorte que la soupape peut s'engager dans cette ouverture lorsque l'appareil est sous pression, ce qui empêche tout déplacement de la patte et de l'ergot.

Ce dispositif apporte une grande sécurité aux utilisateurs. Ce dispositif présente toutefois les graves inconvénients suivants:

Ce dispositif rend nécessaire de modifier l'une des rampes de verrouillage du récipient pour que son extrémité soit conformée en cran pour verrouiller efficacement l'ergot. Cette opération supplémentaire complique la fabrication du récipient et fragilise cette rampe. De plus, cette rampe présente un bord mince et un palier relativement long qui prend appui sur l'ergot lors de l'ouverture et de la fermeture du couvercle qui engendre une usure rapide et irréparable de ces deux pièces.

Par ailleurs, le bouton qui commande le déplacement de l'ergot par rapport à la rampe est associé à un système compliqué de renvoi d'angle nécessitant au moins plusieurs ressorts de rappel.

Le but de la présente invention est de remédier aux inconvénients de la réalisation précitée, en créant un dispositif à la fois plus simple, plus sûr et plus fiable et qui n'exige aucune modification des rampes de verrouillage du récipient et du couvercle.

On connaît d'autre part selon le DE-A-32 23 142 un dispositif de sécurité à la fermeture et à l'ouverture d'un appareil de cuisson dans lequel un verrou est monté coulissant dans la poignée du couvercle, ce verrou comportant une partie qui s'étend au voisinage de la soupape de sécurité et autorisant la fermeture de la soupape lorsque les deux poignées sont en position de fermeture complète et verrouillées l'une à l'autre par le verrou. Toutefois, ce verrou peut être actionné au moyen d'un bouton poussoir mobile indépendamment des poignées, de sorte que la fermeture de la soupape n'est pas réalisée automatiquement lorsque les poignées sont en position de fermeture du couvercle.

Le dispositif de sécurité conforme à l'invention est destiné à un appareil de cuisson sous pression qui comprend une cuve sur laquelle est monté un couvercle, le bord de ce dernier et le bord de la cuve comportant des rampes destinées à s'engager les unes sous les autres et verrouiller par rotation le couvercle sur là cuve, ce couvercle et cette cuve comprenant chacun une poignée, ces deux poignées étant mobiles entre une position d'ouverture du couvercle dans laquelle ces deux poignées sont écartées l'une de l'autre et une position de fermeture dans laquelle elles sont l'une sur l'autre, le couvercle comportant une ouverture communiquant avec l'intérieur de la cuve, dans laquelle est montée une tige munie d'une soupape destinée à fermer cette ouverture lorsque la pression à l'intérieur de la cuve atteint une valeur prédéterminée, ce dispositif comprenant des moyens qui coopèrent ensemble avec la tige de la soupape du couvercle pour interdire la fermeture de la soupape tant que les deux poignées ne sont pas en position de fermeture et pour interdire l'ouverture du couvercle lorsque les deux poignées sont en position de verrouillage, tant que la soupape est en position de fermeture.

Suivant l'invention, ce dispositif est caractérisé en ce que lesdits moyens comprennent un verrou monté coulissant contre l'action d'un ressort dans la poignée du couvercle sous l'action d'un poussoir porté par cette poignée, ce verrou comportant une partie qui s'étend au-dessus de la tige de la soupape et qui présente un trou, en ce que la poignée de la cuve présente une rampe qui prend appui sur le poussoir du verrou pour pousser ce dernier dans une position telle que la tige de la soupape puisse s'engager dans le trou de ladite partie du verrou, lorsque les deux poignées sont en position de fermeture complète, et verrouillées l'une à l'autre par le poussoir du verrou.

En déplaçant les deux poignées en position de verrouillage, la rampe de la poignée de la cuve prend appui sur le poussoir du verrou et pousse ce dernier dans une position telle que le trou de celui-ci soit situé en regard de la tige de la soupape. Lorsque la pression monte à l'intérieur de l'appareil, cette tige s'engage dans ce trou. Le verrou est ainsi immobilisé par cette tige de soupape. Ce verrou empêche en même temps tout déverrouillage des deux poignées, de sorte que l'utilisateur ne peut ouvrir le couvercle tant que la soupape est engagée dans le trou du verrou et que la pression à l'intérieur du récipient dépasse une valeur prédéterminée.

La rampe ménagée dans la poignée qui commande le déplacement du verrou, évite toute modification des rampes ménagées au bord de la cuve qui complique la fabrication de celle-ci. De plus, la rampe de la poignée supprime toute usure de la rampe de la cuve et du verrou prenant appui sur celle-ci dans la réalisation connue.

Dans le cas de la présente invention, les problèmes d'usure de la rampe et du poussoir sont évités du fait que la matière de la poignée présente un faible coefficient de friction avec le poussoir. Par ailleurs, en cas d'usure éventuelle, la poignée est aisément échangeable. En outre, on peut donner à la rampe de la poignée, un angle optimal pour assurer un déplacement progressif et doux du poussoir, ce qui n'est pas le cas dans la réalisation connue car le profil des rampes de la cuve est dicté par des impératifs de fabrication.

D'autres particularités et avantages de l'invention apparaîtront encore dans la description ci-après.

Aux dessins annexés donnés à titre d'exemples non limitatifs:

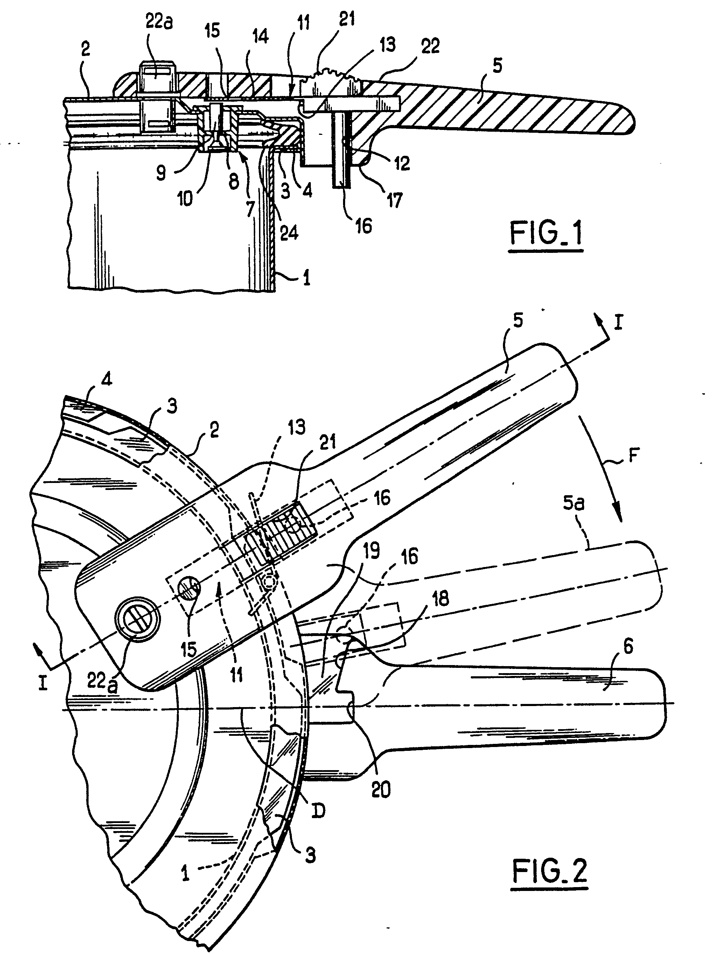

. la figure 1 est une vue en coupe longitudinale partielle suivant le plan I-I de la figure 2 d'un autocuiseur équipé d'un dispositif de sécurité conforme à l'invention;

. la figure 2 est une vue de dessus de l'autocuiseur, ses poignées n'étant pas verrouillées;

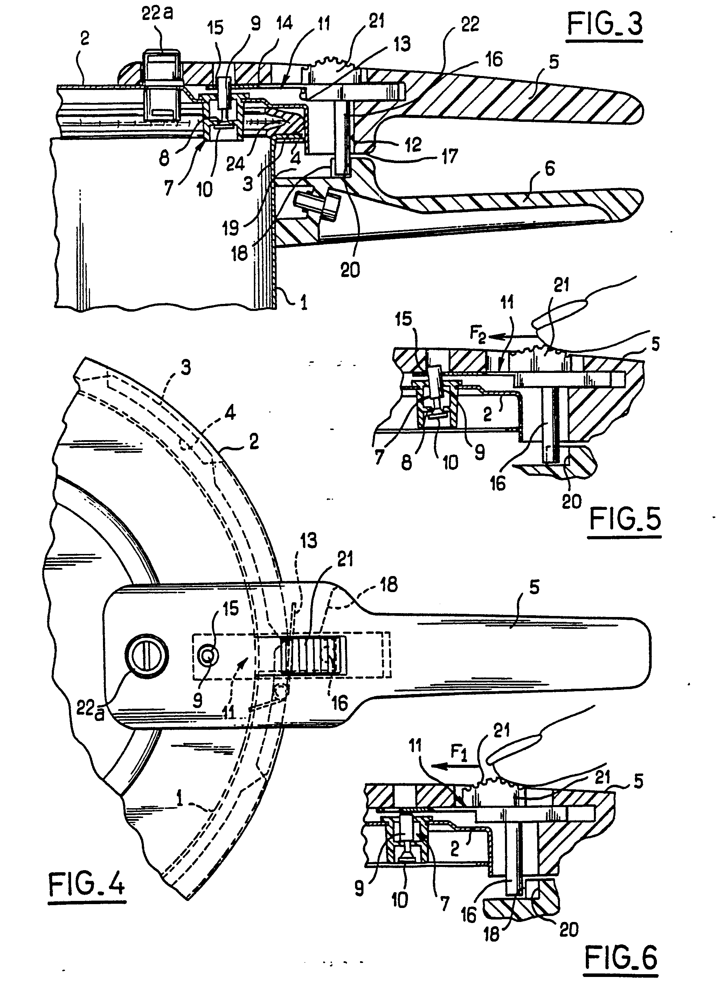

. la figure 3 est une vue analogue à la figure 1, les deux poignées étant verrouillées et la soupape en position de fermeture;

. la figure 4 est une vue de dessus de l'appareil dans la même position que celle de la figure 3;

. la figure 5 est une vue en coupe longitudinale partielle du dispositif de sécurité, montrant comment l'utilisateur peut, avant déverrouillage des poignées, créer une fuite de vapeur à la soupape;

. la figure 6 est une vue analogue à la figure 5, montrant comment l'utilisateur peut déverrouiller les poignées,;

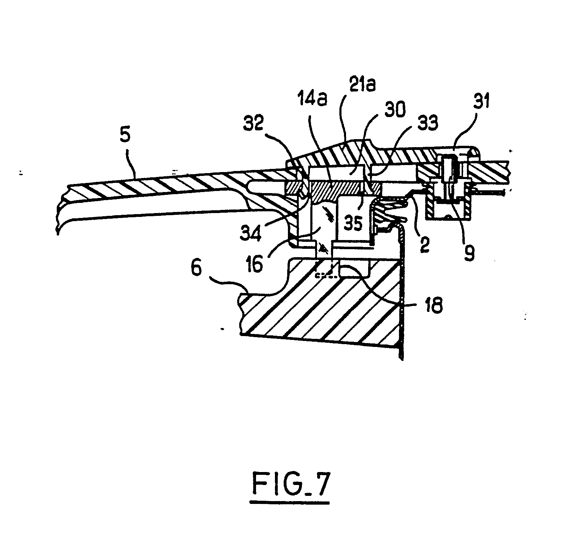

. la figure 7 est une vue en coupe du dispositif présentant un bouton de commande amovible.

Dans la réalisation des figures 1 à 6, on a représenté un autocuiseur comprenant une cuve 1 sur laquelle est monté un couvercle 2. Le bord de la cuve 1 comporte des rampes 3 qui en position de verrouillage du couvercle 2 s'engagent sur des rampes 4 ménagées sur le bord du couvercle 2 (voir notamment les figures 3 et 4).

Sur le couvercle 2 est fixée une poignée 5. La cuve 1 comporte une poignée 6 fixée à sa paroi latérale. La fermeture du couvercle 2 est réalisée par rotation de celui-ci suivant le sens de la flèche F représentée sur la figure 2 jusqu'à la position représentée sur les figures 3 et 4 où les deux poignées 5 et 6 sont superposées et les rampes 4 du couvercle 2 engagées sous les rampes 3 du bord de la cuve 1.

Le couvercle 2 comporte un clapet 7 présentant une ouverture 8 qui communique avec l'intérieur de la cuve 1. Dans cette ouverture 8 est montée une tige verticale 5 munie d'une soupape 10 dite "à limitation de flux" destinée à fermer cette ouverture 8 lorsque la pression à l'intérieur de la cuve 1 atteint une valeur égale à environ 40 mbar.

A l'intérieur de la poignée 5 du couvercle 2 est monté de façon coulissante, un verrou 11 qui dans la position représentée sur les figures 1 et 2 est en appui contre une surface d'appui 12 de la poignée 5, sous l'action d'un ressort de rappel 13.

Ce verrou 11 comporte une lame rigide 14 qui s'étend horizontalement au-dessus de la tige 5 de la soupape 10 et qui présente un trou 15. L'extrémité de cette lame 14 opposée au trou 15 porte une tige-poussoir verticale 16 faisant saillie sous la face inférieure 17 de la poignée 5.

La poignée 6 de la cuve 1 présente une rampe 18 (voir figure 2) ménagée dans un évidement 19 formé dans la face latérale de cette poignée qui est dirigée vers la poignée 5 du couvercle 2. Cette rampe 18 est située dans un plan perpendiculaire à un plan diamétral de la cuve 1 (plan de la figure 2). Cette rampe 18 forme un angle obtus avec une direction passant par le diamètre D de la cuve 1.

Par ailleurs, cette rampe 18 coopère avec la tige-poussoir 16 du verrou 11 pour pousser ce dernier dans une position telle que la tige 19 de la soupape 10 puisse s'engager dans le trou 15 de la lame 14 du verrou 11, lorsque les deux poignées 5, 6 sont en position de fermeture complète comme indiqué sur les figures 3 et 4 et que l'intérieur de la cuve 1 soit sous une pression supérieure à 40 mbar.

L'évidement 19 comporte à l'extrémité de la rampe 18 opposée à la face latérale de la poignée 6 dirigée vers l'autre poignée 5, une encoche 20 dans laquelle se loge et s'encliquette la tige-poussoir 16 du verrou, lorsque les deux poignées 5 et 6 sont en position de verrouillage complet comme indiqué sur les figures 3 et 4.

Dans cette position, les deux poignées 5 et 6 sont complètement verrouillées l'une à l'autre par la tige-poussoir 16 qui est retenue dans l'encoche 20.

Le verrou 11 comporte d'autre part, un bouton de commande 21, faisant saillie sur la face supérieure 22 de la poignée 5 du couvercle (voir figures 1 et 3). Ce bouton de commande 21 est réalisé d'une seule pièce avec le verrou 11 et la tige-poussoir 16. Ce bouton de commande 21 est accessible à l'utilisateur et il permet à celui-ci de déplacer le verrou 11 vers l'avant (flèche F₁ de la figure 6), lorsque la tige 9 du clapet 7 est dégagée du trou 15 du verrou 11.

Cette tige 9 est montée dans le couvercle 2 avec un certain jeu latéral, de façon que lorsqu'elle est engagée dans le trou 15 du verrou 11, une poussée exercée sur ce verrou 11 contre la tige 9 (voir flèche F₂ de la figure 5) puisse incliner cette tige 9 et réaliser ainsi une fuite de vapeur entre la soupape 10 et l'ouverture 8 du clapet 7.

On va maintenant exposer le fonctionnement du dispositif de sécurité que l'on vient de décrire.

Pour fermer le couvercle 2, on tourne la poignée 5 du couvercle vers la poignée 6 fixée à la cuve 1, suivant la flèche F de la figure 2.

Lors de cette rotation, les rampes 4 du couvercle 2 s'engagent sous les rampes 3 de la cuve 1.

Tant que la poignée 5 du couvercle 2 n'est pas complètement fermée (voir position 5a sur la figure 2), la lame 14 du verrou 11 empêche la montée de la tige 9 de la soupape 10, de sorte qu'une fuite est créée par l'ouverture 8 du clapet 7 qui empêche toute montée en pression à l'intérieur de la cuve 1.

Lorsqu'on déplace la poignée 5 du couvercle vers la position de fermeture complète représentée sur les figures 3 et 4, la tige-poussoir 16 du verrou 11 s'engage sur la rampe 18 de la poignée 6. Cette tige-poussoir 16 pousse alors le verrou 11 en comprimant le ressort de rappel 13 jusqu'à ce que cette tige-poussoir 16 s'engage dans l'encoche 20 ménagée à l'extrémité de la rampe 18 en verrouillant ensemble les deux poignées 5 et 6. L'encliquetage de la tigepoussoir 16 dans l'encoche 20 provoque un déclic sonore qui avertit l'utilisateur que l'appareil est correctement verrouillé.

Dans cette position, le trou 15 du verrou 11 est placé en regard de la tige 9 du clapet 7. Lors de la montée en pression de la cuve 1, la tige 9 s'engage dans le trou 15 du verrou 11 en interdisant tout déplacement de ce verrou 11 et de la tige-poussoir 16 engagée dans l'encoche 20. Ainsi les deux poignées 5 et 6 ne peuvent être déverrouillées, tant que l'appareil est sous pression.

L'ouverture du couvercle 2 n'est possible que lorsque la pression interne de la cuve 1 est inférieure à la pression prédéterminée, ce qui permet à la tige 9 de descendre et de se dégager du trou 15 ménagé dans le verrou 11.

Pour décompresser l'appareil, l'utilisateur peut enlever la soupape principale 22a ou la mettre en position d'échappement de la vapeur.

L'utilisateur peut également décompresser lentement l'appareil en appuyant sur le bouton de commande 21 du verrou 11 dans le sens de la flèche F₂ (voir figure 5), ce qui provoque une inclinaison de la tige 9 et une fuite entre la soupape 10 et l'ouverture 8 du clapet.

Lorsque la tige 9 est dégagée du trou 15 du verrou 11, il suffit pour ouvrir l'appareil, de pousser le bouton de commande 21 dans le sens de la flèche F₁ représentée sur la figure 6 pour libérer la tige-poussoir 16 de l'encoche 20, après quoi on peut tourner la poignée 5 dans une direction opposée à la flèche F de la figure 2 pour dégager les rampes 3 et 4 de la cuve 1 et du couvercle 2.

Par conséquent, le dispositif conforme à l'invention interdit toute mise en pression de l'appareil tant que les poignées 5 et 6 ne sont pas verrouillées et interdit toute ouverture possible de l'appareil tant que l'appareil est sous pression.

Bien entendu, l'invention n'est pas limitée aux exemples que l'on vient de décrire et on peut apporter à ceux-ci de nombreuses modifications sans sortir du cadre de l'invention.

Ainsi, dans le cas de la réalisation selon la figure 7, le bouton de commande 21a est fixé de façon amovible à la lame rigide 14a reliée au poussoir 16. Ce bouton 21a recouvre un évidement 30 ménagé dans la poignée 5. Le bouton 21a comporte deux pattes flexibles 32, 33 qui viennent s'encliqueter dans des ouvertures 34, 35, pratiquées dans la lame rigide 14a. De plus, le bouton 21a est prolongé jusqu'au-dessus de la tige de soupape 9, cette prolongation comportant une ouverture 31, située en regard de la tige 9 dans laquelle peut s'engager celle-ci lorsque l'appareil est sous pression en interdisant ainsi tout déplacement du bouton 21a et par suite l'ouverture du couvercle 2.

En enlevant le bouton de commande 21a, on peut nettoyer les saletés qui auraient pu s'infiltrer sous le bouton 21a.

## Revendications

1. Dispositif de sécurité à la fermeture et à l'ouverture d'un appareil de cuisson sous pression qui comprend une cuve (1) sur laquelle est montée un couvercle (2), le bord de ce dernier et le bord de la cuve comportant des rampes (3), (4) destinées à s'engager les unes sous les autres et verrouiller par rotation le couvercle sur la cuve, ce couvercle (2) et cette cuve (1) comprenant chacun une poignée (5, 6), ces deux poignées étant mobiles entre une position d'ouverture du couvercle dans laquelle ces deux poignées sont écartées l'une de l'autre et une position de fermeture dans laquelle elles sont l'une sur l'autre, le couvercle comportant une ouverture (8) communiquant avec l'intérieur de la cuve (1), dans laquelle est montée une tige (9) munie d'une soupape destinée à fermer cette ouverture lorsque la pression à l'intérieur de la cuve (1) atteint une valeur prédéterminée, ce dispositif comprenant des moyens qui coopèrent ensemble avec la tige (9) de la soupape (10) du couvercle (2) pour interdire la fermeture de la soupape (10) tant que les deux poignées (5, 6) ne sont pas en position de fermeture et pour interdire l'ouverture du couvercle (2) lorsque les deux poignées (5, 6) sont en position de verrouillage, tant que la soupape (10) est en position de fermeture, caractérisé en ce que lesdits moyens comprennent un verrou (11) monté coulissant contre l'action d'un ressort dans la poignée (5) du couvercle sous l'action d'un poussoir (16) porté par cette poignée, ce verrou (11) comportant une partie (14) qui s'étend au-dessus de la tige (9) de la soupape et qui présente un trou (15), en ce que la poignée (6) de la cuve (1) présente une rampe (18) qui prend appui sur le poussoir (16) du verrou pour pousser ce dernier dans une position telle que la tige (9) de la soupape puisse s'engager dans le trou (15) de ladite partie (14) du verrou (11), lorsque les deux poignées (5, 6) sont en position de fermeture complète et verrouillées l'une à l'autre par le poussoir (16) du verrou (11).

2. Dispositif conforme à la revendication 1, caractérisé en ce que le verrou (11) est une lame rigide (14) montée coulissante contre l'action d'un ressort (13), le poussoir est une tige (16) faisant saillie sous la face inférieure (17) de la poignée (5) du couvercle (2), en ce que la rampe (18) de la poignée (6) de la cuve (1) est ménagée dans un évidement (19) formé dans la face latérale de la poignée (6) dirigée vers l'autre poignée (5), cette rampe (18) étant située dans un plan perpendiculaire à un plan diamétral de la cuve (1) et formant un angle obtus avec une direction diamétrale (D) de cette cuve (1).

3. Dispositif conforme à la revendication 2, caractérisé en ce que l'évidement (19) comporte à l'extrémité de la rampe (18) opposée à la face latérale de la poignée du couvercle, une encoche (20) servant de logement pour le poussoir (16) du verrou (11) lorsque les deux poignées sont en position de verrouillage complet.

4. Dispositif conforme à l'une des revendications 1 à 3, caractérisé en ce que le verrou (11) porte un bouton de commande (21) accessible à l'utilisateur permettant de dégager le poussoir (16) de l'encoche (20).

5. Dispositif conforme à l'une des revendications 1 à 4, caractérisé en ce que la tige (9) de la soupape (10) est montée dans le couvercle (2) avec un certain jeu latéral, de façon que lorsqu'elle est engagée dans le trou (15) du verrou (11), une poussée exercée sur ce verrou contre la tige puisse incliner celle-ci, sans toutefois que cette poussée entraîne le déverrouillage des poignées.

6. Dispositif conforme à l'une des revendications 4 ou 5, caractérisé en ce que le bouton de commande (21a) est fixé de façon amovible à la lame rigide (14a) reliée au poussoir (16), ce bouton de commande (21a) recouvrant un évidement (30) ménagé dans la poignée (5).

## Patentansprüche

1. Sicherheitsvorrichtung zum Schließen und Öffnen eines Druckkochapparats, der einen Behälter (1) aufweist, auf dem ein Deckel (2) angebracht ist, wobei der Rand des Deckels und der Rand des Behälters Rampen (3, 4) aufweisen, die dazu dienen, ineinander einzugreifen und durch Drehen den Deckel auf dem Behälter zu verriegeln, wobei der Deckel (2) und der Behälter (1) jeweils einen Griff (5, 6) aufweisen, wobei die beiden Griffe beweglich sind zwischen einer Öffnungsstellung des Deckels, in der die beiden Griffe voneinander beabstandet sind, und einer Schließstellung, in der sie übereinander liegen, und wobei der Deckel mit einer Öffnung (8) versehen ist, die mit dem Inneren des Behälters (1) in Verbindung steht und in der ein Schaft (9) angebracht ist, der mit einem Ventil versehen ist, das dazu bestimmt ist, die Öffnung zu verschließen, wenn der Druck im Inneren des Behälters (1) einen vorbestimmten Wert erreicht, mit Mitteln, die mit dem Schaft (9) des Ventils (10) des Deckels (2) so zusammenwirken, daß das Schließen des Ventils (10) verhindert wird, solange die beiden Griffe (5, 6) sich nicht in der Schließposition befinden, und das Öffnen des Deckels (2) bei in der Schließposition befindlichen Griffen (5, 6) verhindert wird, solange das Ventil (10) geschlossen ist, dadurch gekennzeichnet, daß die Mittel einen Riegel (11) enthalten, der gegen die Wirkung einer Feder im Griff (5) des Deckels unter Wirkung eines auf diesem Griff sitzenden Stößels (16) verschiebbar angebracht ist, wobei der Riegel (11) einen Abschnitt (14) aufweist, der sich über den Schaft (9) des Ventils erstreckt und der mit einem Loch (15) versehen ist, daß der Griff (6) des Behälters (1) eine Rampe (18) aufweist, die am Stößel (16) des Riegels anliegt, um letzteren in eine Stellung zu drücken, in der der Schaft (9) des Ventils in das Loch (15) des Abschnitts (14) des Riegels (11) eingreifen kann, wenn sich beide Griffe (5, 6) in der vollständig geschlossenen Position befinden und durch den Stößel (16) des Riegels (11) miteinander verriegelt sind.

2. Vorrichtung nach Anspruch 1, dadurch gekennzeichnet, daß der Riegel (11) eine starre Platte (14) ist, die gegen die Wirkung einer Feder (13) verschiebbar angebracht ist, daß der Stößel ein Schaft (16) ist, der an der Unterfläche (17) des Griffs (5) des Deckels (2) vorsteht, daß die Rampe (18) des Griffs (6) des Behälters (1) in einer Ausnehmung (19) angebracht ist, die in der gegen den anderen Griff (5) gerichteten Seitenfläche des Griffs (6) angebracht ist, wobei die Rampe (18) in einer senkrecht zu einer Diametralebene des Behälters (1) verlaufenden Ebene angeordnet ist und einen stumpfen Winkel mit einer Diametralrichtung (D) des Behälters (1) bildet.

3. Vorrichtung nach Anspruch 2, dadurch gekennzeichnet, daß die Ausnehmung (19) an dem der Seitenfläche des Deckelgriffs gegenüberliegenden Ende der Rampe (18) einen Ausschnitt (20) aufweist, der als Aufnahmebereich für den Stößel (16) des Riegels (11) dient, wenn sich die zwei Griffe in der vollständig verriegelten Position befinden.

4. Vorrichtung nach einem der Ansprüche 1 bis 3, dadurch gekennzeichnet, daß der Riegel (11) einen Betätigungsknopf (21) aufweist, der für den Benützer zugänglich ist und das Lösen des Stößels (16) aus dem Ausschnitt (20) ermöglicht.

5. Vorrichtung nach einem der Ansprüche 1 bis 4, dadurch gekennzeichnet, daß der Schaft (9) des Ventils (10) mit einem gewissen seitlichen Spiel im Deckel (2) angebracht ist, so daß dann, wenn er in das Loch (15) des Riegels (11) eingreift, eine auf den Riegel gegen den Schaft ausgeübte Schubkraft den Schaft schräg stellt, ohne daß die Schubkraft das Entriegeln der Griffe herbeiführt.

6. Vorrichtung nach Anspruch 4 oder 5, dadurch gekennzeichnet, daß der Betätigungsknopf (21a) abnehmbar auf der mit dem Stößel (16) verbundenen starren Platte (14a) angebracht ist, wobei der Betätigungsknopf (21a) eine in dem Griff (5) angebrachte Ausnehmung (30) abdeckt.

**Claims**

1. Safety device for safe closing and opening of a pressure-cooking appliance which comprises a vessel (1) on which is mounted a lid (2), the rim of this latter and the rim of the vessel being provided with ramps (3, 4) which are intended to engage one beneath the other and to lock the lid in position on the vessel by rotational displacement, this lid (2) and this vessel (1) being each provided with a handle (5, 6), these two handles being capable of moving between an open position of the lid in which these two handles are spaced apart and a closed position in which they are applied against each other, the lid being provided with an opening (8) which communicates with the interior of the vessel (1) and in which is mounted a stem (9) fitted with a valve having the intended function of closing this opening when the pressure within the vessel (1) attains a predetermined value, this device comprising means which cooperate together with the stem (9) of the valve (10) of the lid (2) in order to prevent closure of the valve (10) as long as the two handles (5, 6) are not in the closed position and in order to prevent opening of the lid (2) when the two handles (5, 6) are in the locking position as long as the valve (10) is in the closed position, characterized in that said means comprise a locking member (11) mounted for sliding motion in opposition to the action of a spring in the handle (5) of the lid under the action of a pusher (16) carried by this handle, this locking member (11) being constituted by a portion (14) which extends above the valve stem (9) and which is provided with a hole (15), that the handle (6) of the vessel (1) has a ramp (18) which bears on the pusher (16) of the locking member in order to thrust this latter into a position such that the valve stem (9) is permitted to engage in the hole (15) of said portion (14) of the locking member (11) when the two handles (5, 6) are in the fully closed position and locked together by the pusher (16) of the locking member (11).

2. Device in accordance with claim 1, characterized in that the locking member (11) is a rigid blade (14) slidably mounted in opposition to the action of a spring (13), the pusher is a rod (16) which projects beneath the bottom face (17) of the handle (5) of the lid (2), that the ramp (18) of the handle (6) of the vessel (1) is formed in a hollowed-out portion (19) formed in the lateral face of the handle (6) which is directed towards the other handle (5), this ramp (18) being located in a plane which is perpendicular to a diametral plane of the vessel (1) and makes an obtuse angle with a diametral direction (D) of this vessel (1).

3. Device in accordance with claim 2, characterized in that the hollowed-out portion (19) is provided at the end of the ramp (18) remote from the lateral face of the lid handle with a recess (20) which serves as a housing for the pusher (16) of the locking member (11) when the two handles are in the fully locked position.

4. Device in accordance with one of claims 1 to 3, characterized in that the locking member (11) carries a control button (21) which is accessible to the user and makes it possible to disengage the pusher (16) from the recess (20).

5. Device in accordance with one of claims 1 to 4, characterized in that the stem (9) of the valve (10) is mounted in the lid (2) with a certain lateral clearance in order to ensure that when it is engaged in the hole (15) of the locking member (11), a thrust exerted on this locking member against the valve stem can move this latter to an inclined position without having the effect, however, of unlocking the handles.

6. Device in accordance with one of claims 4 or 5, characterized in that the control button (21a) is removably fixed on the rigid blade (14a) which is attached to the pusher (16), this control button (21a) being designed to cover a hollowed-out portion (30) formed in the handle (5).

7

0 156 669

FIG.1

FIG.2

1

FIG_3

FIG_4

FIG.5

FIG.6

FIG. 7